# EUROPEAN PATENT SPECIFICATION

(11) **EP 3 876 369 B1**
(45) Date of publication and mention of the grant of the patent: **02.04.2025**
(21) Application number: 19892438.3
(22) Date of filing: 05.12.2019
(51) Int. Cl.: H02B 1/36, H02B 11/133, H01H 9/20

(54) **MECHANICAL INTERLOCKING MECHANISM**
MECHANISCHER VERRIEGELUNGSMECHANISMUS
MÉCANISME D'INTERVERROUILLAGE MÉCANIQUE

(30) Priority: 05.12.2018 CN 201822031596 U
(43) Date of publication of application: 08.09.2021
(73) Proprietor: Schneider Electric Industries SAS, 92500 Rueil-Malmaison (FR)
(72) Inventor: LI, Huaying, Shanghai 201203 (CN); ZHOU, Huidong, Yanta District Xi'an, Shaanxi 710061 (CN)
(74) Representative: Manitz Finsterwald Patent- und Rechtsanwaltspartnerschaft mbB
(86) International application number: PCT/CN2019/123245
(87) International publication number: WO 2020/114447

(56) References cited:
- CN-U- 203 180 409
- CN-U- 204 156 385
- CN-U- 204 156 385
- CN-U- 207 926 046
- CN-U- 209 071 929
- JP-A- H1 173 856

## Description

### Cross-references to Related Applications

This application claims the priority of the Chinese application CN201822031596.8 filed with the China National Intellectual Property Administration on December 5, 2018.

### Technical field

The present disclosure relates to drawer comprising a molded case circuit breaker and a mechanical interlocking mechanism for interlocking the molded case circuit breaker with the drawer.

### Background

It is stipulated in the standard GB7251.1 of low-voltage switchgear that a removable component should be equipped with means which can ensure that it can be removed and inserted after the main circuit is disconnected from the load. As for the drawer cabinet, it is necessary to ensure that the drawer can only be withdrawn from the working position or inserted from the withdrawn position when the molded case circuit breaker in the drawer is in the open state. For this requirement, there are already many solutions for the application of manually operated molded case circuit breakers in drawer cabinets. However, for the molded case circuit breaker with electric operating mechanism, due to its own structural characteristics, the interlocking between the molded case circuit breaker with electric operating mechanism and the drawer is mostly electrical interlocking, that is, the operating mechanism of the molded case circuit breaker is controlled by the position switch or other sensing equipment forming a control circuit with a certain logical relationship, so that when the drawer moves from the working position to the withdrawn position or from the withdrawn position to the working position, the circuit breaker is at open status. However, electrical interlocking is less reliable than mechanical interlocking. Therefore, there is a need for a mechanical interlocking mechanism for interlocking the molded case circuit breaker and the drawer to improve reliability. CN 204 156 385 U discloses a drawer according to the preamble of independent claim 1. An interlocking device for a circuit breaker is disclosed by JP H11 73856 A.

### Summary

According to the present disclosure, a drawer according to independent claim 1 is provided.

According to the present disclosure, one or more of the following features may be provided individually or in combination.

According to an embodiment of the present disclosure, the blocking assembly further comprises a sliding baffle return spring, which is a tension spring, and one end of which is coupled to the sliding baffle and the other end to the support frame, wherein when the molded case circuit breaker driving rod moves from the closed position to the open position, the sliding baffle returns to the corresponding position under the action of the sliding baffle return spring.

According to an embodiment of the present disclosure, the second end of the push rod is hinged with the sliding baffle, and when the molded case circuit breaker driving rod moves from the closed position to the open position, the sliding baffle is driven by the push rod to return to the corresponding position.

According to an embodiment of the present disclosure, the rotary push plate return spring is a tension spring, and one end of which is connected to the rotary push plate, and the other end is connected to the drawer, and when the driving member moves from the unlocking position to the locking position, the rotary push plate returns to the initial position under the action of the rotary push plate return spring.

From the following detailed description of the best mode for implementing the present teaching in conjunction with the accompanying drawings, the above-mentioned features and advantages and other features and advantages of the present teaching will be apparent.

### Brief description of the figures

Fig. 1 is a plan view showing the drawer according to the present disclosure.
Fig. 2 is a plan view showing the mechanical interlocking mechanism according to the first embodiment of the present disclosure.
Fig. 3 is a perspective view showing the mechanical interlocking mechanism according to the first embodiment of the present disclosure.
Fig. 4 is an enlarged perspective view showing the locking device of the mechanical interlocking mechanism according to the first embodiment of the present disclosure.
Fig. 5 is an enlarged perspective view showing the support frame of the mechanical interlocking mechanism according to the first embodiment of the present disclosure.
Fig. 6 is a perspective view showing the mechanical interlocking mechanism according to the second embodiment of the present disclosure.

In different drawings, the same elements are denoted by the same reference numerals.

### Detailed description

In order to make the objectives, technical solutions, and advantages of the technical solutions of the present disclosure clearer, the technical solutions of the embodiments of the present disclosure will be clearly and completely described below in conjunction with the drawings of specific embodiments of the present disclosure. In the drawings, the same reference numerals represent the same components. It should be noted that the described embodiments are part of the embodiments of the present disclosure, rather than all of the embodiments. Based on the described embodiments of the present disclosure, all other embodiments obtained by those of ordinary skill in the art without creative labor are within the scope of protection of the present disclosure, which is defined by the claims.

Unless otherwise defined, the technical terms or scientific terms used herein shall have the usual meanings understood by those with ordinary skills in the field to which the present disclosure belongs. The "first", "second" and similar words used in the specification and claims of the patent application of the present disclosure do not denote any order, quantity or importance, but are only used to distinguish different components. Similarly, similar words such as "one" or "a" do not necessarily indicate quantitative restrictions. "Comprise" or "include" and other similar words mean that the element or item appearing before the word encompasses the element or item listed after the word and its equivalents, but does not exclude other elements or items. Similar words such as "connected" or "in connection" are not limited to physical or mechanical connections, but may include electrical connections, whether direct or indirect. "Up", "down", "left", "right", etc. are only used to indicate the relative position relationship, when the absolute position of the described object changes, the relative position relationship may also change accordingly.

Hereinafter, the embodiments of the present disclosure will be described in detail with reference to the accompanying drawings.

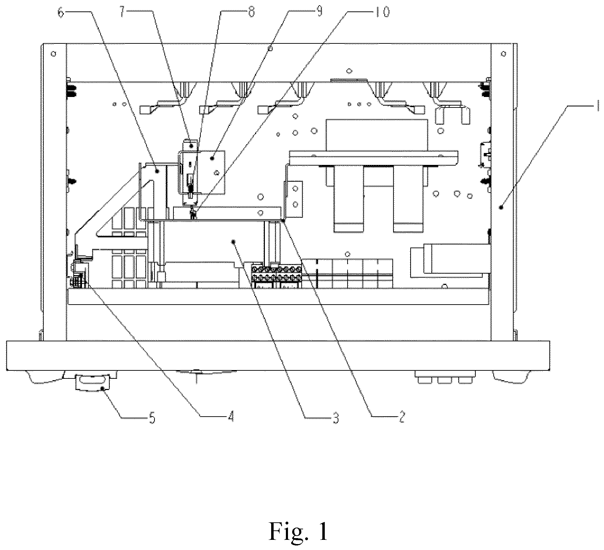

Fig. 1 is a plan view showing the drawer 1 according to the present disclosure. The drawer is installed in a drawer cabinet and is movable between a withdrawn position and a working position in the drawer cabinet. A molded case circuit breaker 3 is installed in the drawer 1 via a molded case circuit breaker mounting plate. An unlocking button 5 is installed on a door panel of the drawer 1. A user unlocks the drawer 1 by pressing the unlocking button 5 on the outside of the drawer 1, thereby withdrawing the drawer 1 from the drawer cabinet. The present disclosure provides a mechanical interlocking mechanism that interlocks the molded case circuit breaker 3 with the drawer 1, such that the drawer 1 cannot be unlocked when the molded case circuit breaker 3 is closed, and the drawer 1 can be unlocked when the molded case circuit breaker 3 is opened.

The mechanical interlocking mechanism according to the embodiment of the present disclosure will be described in detail below with reference to the accompanying drawings.

### <First Embodiment>

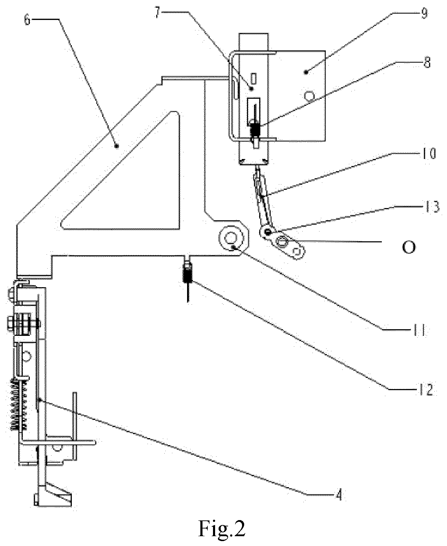

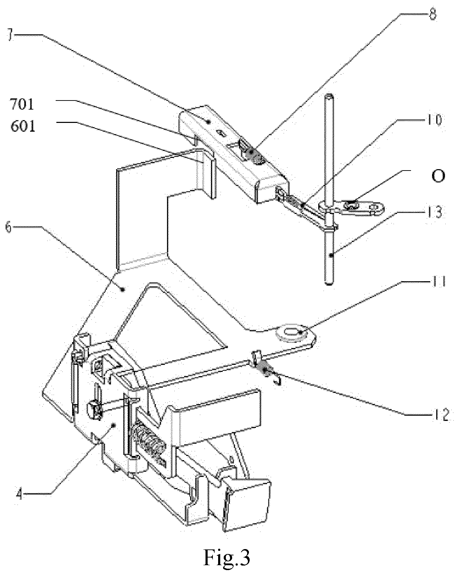

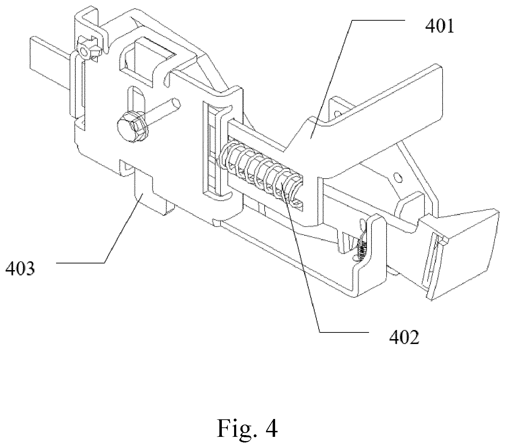

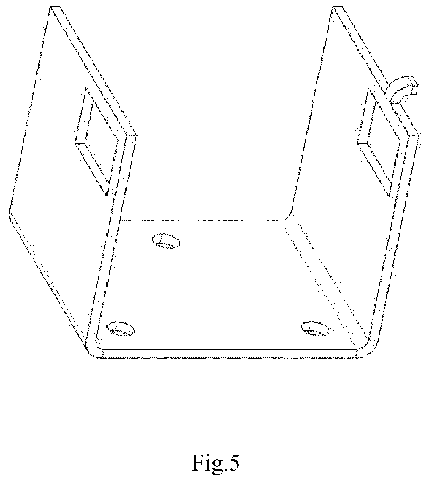

Fig. 2 is a plan view showing the mechanical interlocking mechanism according to the first embodiment of the present disclosure. Fig. 3 is a perspective view showing the mechanical interlocking mechanism according to the first embodiment of the present disclosure. Fig. 4 is an enlarged perspective view showing a locking device 4 of the mechanical interlocking mechanism according to the first embodiment of the present disclosure. Fig. 5 is an enlarged perspective view showing a support frame 9 of the mechanical interlocking mechanism according to the first embodiment of the present disclosure.

Herein, referring to the plan view of Fig. 2, the up-down direction of Fig. 2 on the paper surface is defined as the up-down direction of this text, and the left-right direction of Fig. 2 on the paper surface is defined as the left-right direction of this text.

The mechanical interlocking mechanism according to the first embodiment of the present disclosure will be described below with reference to Figs. 2-4.

The mechanical interlocking mechanism according to the first embodiment includes a molded case circuit breaker driving rod 13, a blocking assembly, a rotary push plate 6 and a locking device 4.

The molded case circuit breaker driving rod 13 is installed in the molded case circuit breaker 3 and is rotatable around an axis O parallel to and spaced apart from the longitudinal axis thereof between a closed position and an open position. When the molded case circuit breaker driving rod 13 is in the closed position, the molded case circuit breaker 3 is closed; when the molded case circuit breaker driving rod 13 is in the open position, the molded case circuit breaker 3 is opened.

The locking device 4 is installed in the drawer 1. Referring to Fig. 4, the locking device 4 includes a driving member 401, an elastic member 402 and a locking member 403. The driving member 401 is movable between a locking position and an unlocking position, and the driving member 401 is initially biased by the elastic member 402 to the locking position. When the driving member 401 is in the locking position, the locking member 403 cooperates with a matching member provided in the drawer cabinet, thereby locking the drawer 1 in the drawer cabinet. The driving member 401 is linked with the unlocking button 5 installed on the door panel of the drawer 1, and when a user presses the unlocking button 5, the driving member 401 overcomes the biasing force of the elastic member 402 and is driven to the unlocking position, and the locking member 403 is driven to disengage from the cooperation with the mating member, thereby unlocking the drawer 1 so that the drawer 1 can be withdrawn, otherwise the driving member 401 is in the locking position under the bias of the elastic member 402.

The rotary push plate 6 includes a shaft sleeve 11, and the rotary push plate 6 is rotatable between an initial position and a rotating position around a fixed shaft sleeved in the shaft sleeve 11 and fixed in the drawer 1. The rotary push plate 6 is initially biased to the initial position by a rotary push plate return spring 12. In the initial position, an end of the rotary push plate 6 abuts against the driving member 401 of the locking device 4. Optionally, the rotary push plate return spring 12 is a tension spring, and one end thereof is coupled to the rotary push plate 6 and the other end is coupled to the drawer 1. When the driving member 401 moves from the locking position to the unlocking position, the driving member 401 pushes the rotary push plate 6 to overcome the biasing force of the rotary push plate return spring 12 to rotate to the rotating position; when the driving member 401 moves from the unlocking position to the locking position, the rotary push plate 6 returns to the initial position under the action of the rotary push plate return spring 12. The rotary push plate 6 further includes a tongue 601.

The blocking assembly is movable between a blocking position and a non-blocking position, and includes a push rod 10, a support frame 9, a sliding baffle 7 and a sliding baffle return spring 8.

The push rod 10 is slidably disposed on a push rod support (not shown) fixed to the drawer 1, and includes a first end hinged with the molded case circuit breaker driving rod 13 and a second end configured to cooperate with the sliding baffle 7.

The support frame 9 is fixed to the drawer 1 and includes at least two openings, as shown in Fig. 5.

The sliding baffle 7 is supported by passing through the opening of the support frame 9, and the size of the opening of the support frame 9 is set such that the sliding baffle 7 is slidable only in the direction perpendicular to the opening, that is, it is slidable in the up-down direction of Fig. 2. Specifically, the sliding baffle is slidable between a corresponding position and a non-corresponding position. The sliding baffle 7 includes a notch 701 on its side facing the rotary push plate 6. When the sliding baffle 7 is in the corresponding position, the notch 701 of the sliding baffle 7 corresponds to the position of the tongue 601 of the rotary push plate 6, and the rotary push plate 6 can be rotated to the rotating position under the drive of the driving member 401. In the rotating position, the tongue 601 passes through the notch 701. When the sliding baffle 7 is in the non-corresponding position, the notch 701 of the sliding baffle 7 does not correspond to the position of the tongue 601 of the rotary push plate 6, and the sliding baffle 7 blocks the rotation of the rotary push plate 601 from the initial position to the rotating position.

Optionally, the sliding baffle return spring 8 is a tension spring, one end of which is coupled to the sliding baffle 7 and the other end is coupled to the support frame 9. The sliding baffle return spring 8 initially biases the sliding baffle 7 to the corresponding position. When the molded case circuit breaker driving rod 13 moves from the open position to the closed position, the sliding baffle 7 is pushed to the non-corresponding position by overcoming the biasing force of the sliding baffle return spring 8; when the molded case circuit breaker driving rod 13 moves from the closed position to the open position, the sliding baffle 7 returns to the corresponding position under the action of the sliding baffle return spring 8.

Hereinafter, the specific process of implementing the interlocking of the molded case circuit breaker 3 and the drawer 1 according to the mechanical interlocking mechanism of the first embodiment will be described in detail with reference to the direction of Fig. 2.

When the molded case circuit breaker 3 is closed, the molded case circuit breaker driving rod 13 moves from the open position to the closed position, that is, it rotates clockwise around the axis O. Since the first end of the push rod 10 is hinged with the molded case circuit breaker driving rod 13, the push rod 10 is driven, and the sub-movement of the push rod 10 in the up and down direction causes the second end of the push rod 10 to push the sliding baffle 7 upward to a non-corresponding position, at this time, the notch 701 of the sliding baffle 7 does not correspond to the position of the tongue 601 of the rotary push plate 6, that is, the blocking assembly moves to the blocking position, therefore, the upward movement of the driving member 401 from the locking position to the unlocking position and the clockwise rotation of the rotary push plate 6 from the initial position to the rotating position are blocked by the blocking assembly, specifically blocked by the sliding baffle 7, thereby the drawer 1 cannot be unlocked.

When the molded case circuit breaker 3 is opened, the molded case circuit breaker driving rod 13 moves from the closed position to the open position, that is, it rotates counterclockwise around the axis O. Since the push rod 10 has a downward sub-movement driven by the molded case circuit breaker driving rod 13, the sliding baffle 7 returns downward to the corresponding position under the action of the sliding baffle return spring 8, at this time, the notch 701 of the sliding baffle 7 corresponds to the position of the tongue 601 of the rotary push plate 6, that is, the blocking assembly moves to the non-blocking position, therefore, the driving member 401 can be driven upward from the locking position to the unlocking position, while driving the rotary push plate 6 to rotate clockwise from the initial position to the rotating position, that is to say, the drawer 1 can be unlocked.

Therefore, the mechanical interlocking device according to the first embodiment of the present disclosure realizes a reliable mechanical interlocking of the molded case circuit breaker 3 and the drawer 1. Drawer 1 cannot be unlocked when molded case circuit breaker 3 is closed, and drawer 1 can only be unlocked when molded case circuit breaker 3 is opened.

### <Second Embodiment>

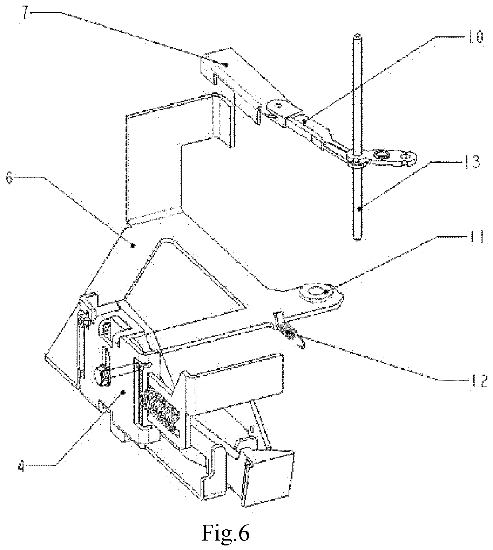

Fig. 6 is a perspective view showing the mechanical interlocking mechanism according to the second embodiment of the present disclosure.

The mechanical interlocking mechanism according to the second embodiment is similar to the mechanical interlocking mechanism according to the first embodiment, except that the configuration of the push rod 10 and the cooperation of the push rod 10 and the sliding baffle 7 are different from those of the first embodiment. Only the differences between the second embodiment and the first embodiment will be described below.

As shown in Fig. 6, the second end of the push rod 10 is hinged with the sliding baffle 7. Through the hinged connection between the molded case circuit breaker driving rod 13 and the push rod 10 and the hinge connection between the push rod 10 and the sliding baffle 7, when the molded case circuit breaker driving rod 13 moves from the open position to the closed position, the push rod 10 drives the sliding baffle 7 to move from the corresponding position to the non-corresponding position; when the molded case circuit breaker driving rod 13 moves from the closed position to the open position, the push rod 10 drives the sliding baffle 7 to return from the non-corresponding position to the corresponding position.

Therefore, the mechanical interlocking device according to the first embodiment of the present disclosure realizes a reliable mechanical interlocking of the molded case circuit breaker 3 and the drawer 1. Drawer 1 cannot be unlocked when molded case circuit breaker 3 is closed, and drawer 1 can only be unlocked when molded case circuit breaker 3 is opened.

Although the best mode for implementing many aspects of the present teaching has been described in detail, those skilled in the art will understand that, without departing from the concept of the present disclosure, many variations and modifications can be made to the above specific embodiments, and various technical features and structures proposed by the present disclosure can be combined in various ways without exceeding the protection scope of the present disclosure, which is defined by the claims.

## Claims

1. A drawer (1) comprising a molded case circuit breaker (3) installed therein and a mechanical interlocking mechanism for interlocking the molded case circuit breaker (3) with the drawer (1), wherein, when the drawer (1) is unlocked, the drawer (1) is movable between a withdrawn position and a working position in a drawer cabinet, and the mechanical interlocking mechanism includes:
a molded case circuit breaker driving rod (13) installed in the molded case circuit breaker (3) and rotatable between a closed position and an open position, wherein the molded case circuit breaker (3) is closed when the molded case circuit breaker driving rod (13) is in the closed position, and the molded case circuit breaker (3) is opened when the molded case circuit breaker driving rod (13) is in the open position;
a blocking assembly installed in the drawer (1) and movable between a blocking position and a non-blocking position, wherein the blocking assembly comprises a support frame (9) fixed to the drawer (1), and including at least two openings; and
a locking device (4) installed in the drawer (1) and including a driving member (401), an elastic member (402) and a locking member (403), wherein the driving member (401) is movable between a locking position and a unlocking position, and is biased to the locking position by the elastic member (402), wherein in the locking position, the locking member (403) is configured to cooperate with a mating member provided in the drawer cabinet, thereby locking the drawer (1) in the drawer cabinet, wherein when the driving member (401) is driven to the unlocking position by overcoming the biasing force of the elastic member (402), the locking member (403) is driven to disengage from the cooperation with the matching member, thereby unlocking the drawer (1),
wherein, when the molded case circuit breaker (3) is closed, the movement of the molded case circuit breaker driving rod (13) from the open position to the closed position drives the blocking assembly to move to the blocking position, in which the movement of the driving member (401) from the locking position to the unlocking position is blocked, so that the drawer (1) cannot be unlocked; when the molded case circuit breaker (3) is opened, the movement of the molded case circuit breaker driving rod (13) from the closed position to the open position causes the blocking assembly to move to the non-blocking position, in which the driving member (401) can be driven from the locking position to the unlocking position, thereby unlocking the drawer (1),
**characterized in that**,
the molded case circuit breaker driving rod (13) is rotatable around an axis parallel to and spaced from its longitudinal axis and
the blocking assembly comprises:
a push rod (10), including a first end hinged with the molded case circuit breaker driving rod (13) and a second end; and
a sliding baffle (7) supported by passing through the at least two openings of the support frame (9), wherein the size of the at least two openings of the support frame (9) is set such that the sliding baffle (7) is only slidable between a corresponding position and a non-corresponding position in a direction perpendicular to the at least two openings, wherein the sliding baffle (7) includes a notch (701) on one side thereof,
wherein the mechanical interlocking mechanism further includes a rotary push plate (6) which includes a shaft sleeve (11) and is rotatable between an initial position and a rotating position around a fixed shaft sleeved in the shaft sleeve (11) and fixed in the drawer (1), wherein the rotary push plate (6) is biased to the initial position by a rotary push plate return spring (12), and in the initial position, an end of the rotary push plate (6) abuts against the driving member (401) of the locking device, wherein the rotary push plate (6) includes a tongue (601) on the side facing the sliding baffle (7), and when the sliding baffle (7) is at the corresponding position, the notch (701) of the sliding baffle (7) corresponds to the position of the tongue (601) of the rotary push plate (6), and the rotary push plate (6) can be rotated to the rotating position under the drive of the driving member (401), and in the rotating position, the tongue (601) passes through the notch (701), wherein when the sliding baffle (7) is in a non-corresponding position, the notch (701) of the sliding baffle (7) does not correspond to the position of the tongue (601) of the rotary push plate (6), and the sliding baffle (7) blocks the rotation of the rotary push plate (6) from the initial position to the rotating position,
wherein when the molded case circuit breaker is closed, the movement of the molded case circuit breaker driving rod (13) from the open position to the closed position drives the push rod (10) to move, and the second end of the push rod (10) pushes the sliding baffle (7), such that the sliding baffle (7) moves to the non-corresponding position, and the blocking assembly moves to the blocking position, and the movement of the driving member (401) from the locking position to the unlocking position and the rotation of the rotary push plate (6) from the initial position to the rotating position are blocked;
wherein when the molded case circuit breaker is open, the molded case circuit breaker driving rod (13) moves from the closed position to the open position, the sliding baffle (7) returns to the corresponding position, the blocking assembly moves to the non-blocking position, and the driving member (401) can be driven from the locking position to the unlocking the position, and at the same time drives the rotary push plate (6) to rotate from the initial position to the rotating position.

2. The drawer (1) according to claim 1, **characterized in that**, the blocking assembly further comprises a sliding baffle return spring (8), which is a tension spring, and one end of which is coupled to the sliding baffle (7), and the other end is coupled to the support frame (9), wherein when the molded case circuit breaker driving rod (13) moves from the closed position to the open position, the sliding baffle (7) returns to the corresponding position under the action of the sliding baffle return spring (8).

3. The drawer (1) according to claim 1, **characterized in that**, the second end of the push rod (10) is hinged with the sliding baffle, and when the molded case circuit breaker driving rod (13) moves from the closed position to the open position, the sliding baffle (7) is driven by the push rod (10) to return to the corresponding position.

4. The drawer (1) according to any one of claims 1-3, **characterized in that**, the return spring of the rotary push plate (6) is a tension spring, and one end of which is connected to the rotary push plate (6), and the other end is connected to the drawer (1), wherein when the driving member moves from the unlocking position to the locking position, the rotary push plate (6) returns to the initial position under the action of the rotary push plate return spring (12).

## Patentansprüche

1. Schublade (1), die einen darin installierten Schutzschalter (3) mit geformtem Gehäuse und einen mechanischen Verriegelungsmechanismus zum Verriegeln des Schutzschalters (3) mit geformtem Gehäuse mit der Schublade (1) umfasst, wobei, wenn die Schublade (1) entriegelt ist, die Schublade (1) zwischen einer zurückgezogenen Position und einer Arbeitsposition in einem Schubladengehäuse beweglich ist und der mechanische Verriegelungsmechanismus umfasst:
eine Antriebsstange (13) des Schutzschalters mit geformtem Gehäuse, die in dem Schutzschalter (3) mit geformtem Gehäuse installiert ist und zwischen einer geschlossenen Position und einer offenen Position drehbar ist, wobei der Schutzschalter (3) mit geformtem Gehäuse geschlossen ist,
wenn sich die Antriebsstange (13) des Schutzschalters mit geformtem Gehäuse in der geschlossenen Position befindet, und der Schutzschalter (3) mit geformtem Gehäuse geöffnet ist, wenn sich die Antriebsstange (13) des Schutzschalters mit geformtem Gehäuse in der offenen Position befindet;
eine Blockieranordnung, die in der Schublade (1) installiert ist und zwischen einer Blockierposition und einer Nichtblockierposition beweglich ist, wobei die Blockieranordnung einen Stützrahmen (9) umfasst, der an der Schublade (1) befestigt ist und mindestens zwei Öffnungen umfasst; und
eine Verriegelungsvorrichtung (4), die in der Schublade (1) installiert ist und ein Antriebselement (401), ein elastisches Element (402) und ein Verriegelungselement (403) umfasst, wobei das Antriebselement (401) zwischen einer Verriegelungsposition und einer Entriegelungsposition beweglich ist und durch das elastische Element (402) in die Verriegelungsposition vorgespannt ist, wobei das Verriegelungselement (403) in der Verriegelungsposition konfiguriert ist, um mit einem in dem Schubladengehäuse bereitgestellten Gegenelement zusammenzuwirken, wodurch die Schublade (1) in dem Schubladengehäuse verriegelt wird, wobei, wenn das Antriebselement (401) durch Überwinden der Vorspannkraft des elastischen Elements (402) in die Entriegelungsposition angetrieben wird, das Verriegelungselement (403) angetrieben wird, um sich aus dem Zusammenwirken mit dem Gegenelement zu lösen, wodurch die Schublade (1) entriegelt wird, wobei, wenn der Schutzschalter (3) mit geformtem Gehäuse geschlossen ist, die Bewegung der Antriebsstange (13) des Schutzschalters mit geformtem Gehäuse von der offenen Position in die geschlossene Position die Blockieranordnung antreibt, um sich in die Blockierposition zu bewegen, in der die Bewegung des Antriebselements (401) von der Verriegelungsposition in die Entriegelungsposition blockiert ist, so dass die Schublade (1) nicht entriegelt werden kann; wenn der Schutzschalter (3) mit geformtem Gehäuse geöffnet ist, die Bewegung der Antriebsstange (13) des Schutzschalters mit geformtem Gehäuse von der geschlossenen Position in die offene Position die Blockieranordnung veranlasst, sich in die Nichtblockierposition zu bewegen, in der das Antriebselement (401) von der Verriegelungsposition in die Entriegelungsposition angetrieben werden kann, wodurch die Schublade (1) entriegelt wird,
**dadurch gekennzeichnet, dass**
die Antriebsstange (13) des Schutzschalters mit geformtem Gehäuse um eine Achse drehbar ist, die parallel zu ihrer Längsachse und von ihr beabstandet ist, und
die Blockieranordnung umfasst:
eine Schubstange (10), die ein erstes Ende, das mit der Antriebsstange (13) des Schutzschalters mit geformtem Gehäuse gelenkig verbunden ist, und ein zweites Ende umfasst; und
eine Gleit-Ablenktafel (7), die gelagert wird, indem sie durch die mindestens zwei Öffnungen des Stützrahmens (9) verläuft, wobei die Größe der mindestens zwei Öffnungen des Stützrahmens (9) so eingestellt ist, dass die Gleit-Ablenktafel (7) nur zwischen einer entsprechenden Position und einer nicht entsprechenden Position in einer Richtung senkrecht zu den mindestens zwei Öffnungen verschiebbar ist, wobei die Gleit-Ablenktafel (7) eine Kerbe (701) auf einer Seite davon umfasst,
wobei der mechanische Verriegelungsmechanismus ferner eine Drehschubplatte (6) umfasst, die eine Wellenhülse (11) umfasst und zwischen einer Ausgangsposition und einer Drehposition um eine feste Welle drehbar ist, die in die Wellenhülse (11) gesteckt und in der Schublade (1) befestigt ist, wobei die Drehschubplatte (6) durch eine Drehschubplatten-Rückstellfeder (12) in die Ausgangsposition vorgespannt ist und in der Ausgangsposition ein Ende der Drehschubplatte (6) an dem Antriebselement (401) der Verriegelungsvorrichtung anliegt, wobei die Drehschubplatte (6) eine Zunge (601) auf der Seite umfasst, die der Gleit-Ablenktafel (7) zugewandt ist, und wenn sich die Gleit-Ablenktafel (7) in der entsprechenden Position befindet, die Kerbe (701) der Gleit-Ablenktafel (7) der Position der Zunge (601) der Drehschubplatte (6) entspricht und die Drehschubplatte (6) unter dem Antrieb des Antriebselements (401) in die Drehposition gedreht werden kann und in der Drehposition die Zunge (601) durch die Kerbe (701) verläuft, wobei, wenn sich die Gleit-Ablenktafel (7) in einer nicht entsprechenden Position befindet, die Kerbe (701) der Gleit-Ablenktafel (7) nicht der Position der Zunge (601) der Drehschubplatte (6) entspricht und die Gleit-Ablenktafel (7) die Drehung der Drehschubplatte (6) von der Ausgangsposition in die Drehposition blockiert,
wobei, wenn der Schutzschalter mit geformtem Gehäuse geschlossen ist, die Bewegung der Antriebsstange (13) des Schutzschalters mit geformtem Gehäuse von der offenen Position in die geschlossene Position die Schubstange (10) antreibt, um sich zu bewegen, und das zweite Ende der Schubstange (10) die Gleit-Ablenktafel (7) schiebt, so dass sich die Gleit-Ablenktafel (7) in die nicht entsprechende Position bewegt und sich die Blockieranordnung in die Blockierposition bewegt und die Bewegung des Antriebselements (401) von der Verriegelungsposition in die Entriegelungsposition und die Drehung der Drehschubplatte (6) von der Ausgangsposition in die Drehposition blockiert sind;
wobei, wenn der Schutzschalter mit geformtem Gehäuse geöffnet ist, sich die Antriebsstange (13) des Schutzschalters mit geformtem Gehäuse von der geschlossenen Position in die offene Position bewegt, die Gleit-Ablenktafel (7) in die entsprechende Position zurückkehrt, sich die Blockieranordnung in die Nichtblockierposition bewegt und das Antriebselement (401) von der Verriegelungsposition in die Entriegelungsposition angetrieben werden kann und gleichzeitig die Drehschubplatte (6) antreibt, um sich von der Ausgangsposition in die Drehposition zu drehen.

2. Schublade (1) nach Anspruch 1, **dadurch gekennzeichnet, dass** die Blockieranordnung ferner eine Rückstellfeder (8) der Gleit-Ablenktafel umfasst, die eine Zugfeder ist und von der ein Ende mit der Gleit-Ablenktafel (7) gekoppelt ist und das andere Ende mit dem Stützrahmen (9) gekoppelt ist, wobei, wenn sich die Antriebsstange (13) des Schutzschalters mit geformtem Gehäuse von der geschlossenen Position in die offene Position bewegt, die Gleit-Ablenktafel (7) unter der Wirkung der Rückstellfeder (8) der Gleit-Ablenktafel in die entsprechende Position zurückkehrt.

3. Schublade (1) nach Anspruch 1, **dadurch gekennzeichnet, dass** das zweite Ende der Schubstange (10) mit der Gleitplatte gelenkig verbunden ist und, wenn sich die Antriebsstange (13) des Schutzschalters mit geformtem Gehäuse von der geschlossenen Position in die offene Position bewegt, die Gleit-Ablenktafel (7) durch die Schubstange (10) angetrieben wird, um in die entsprechende Position zurückzukehren.

4. Schublade (1) nach einem der Ansprüche 1-3, **dadurch gekennzeichnet, dass** die Rückstellfeder der Drehschubplatte (6) eine Zugfeder ist und von der ein Ende mit der Drehschubplatte (6) verbunden ist und das andere Ende mit der Schublade (1) verbunden ist, wobei, wenn sich das Antriebselement von der Entriegelungsposition in die Verriegelungsposition bewegt, die Drehschubplatte (6) unter der Wirkung der Drehschubplatten-Rückstellfeder (12) in die Ausgangsposition zurückkehrt.

## Revendications

1. Tiroir (1) comprenant un coupe-circuit (3) en boîtier moulé installé à l'intérieur de celui-ci et un mécanisme d'interverrouillage mécanique destiné à interverrouiller le coupe-circuit (3) en boîtier moulé avec le tiroir (1), dans lequel, quand le tiroir (1) est déverrouillé, le tiroir (1) peut être déplacé entre une position de retrait et une position de travail dans un caisson de tiroir, et le mécanisme d'interverrouillage mécanique inclut :
une tige d'entraînement (13) de coupe-circuit en boîtier moulé installée dans le coupe-circuit (3) en boîtier moulé et pouvant être mise en rotation entre une position fermée et une position ouverte, dans lequel le coupe-circuit (3) en boîtier moulé est fermé quand la tige d'entraînement (13) de coupe-circuit en boîtier moulé est dans la position fermée, et le coupe-circuit (3) en boîtier moulé est ouvert quand la tige d'entraînement (13) de coupe-circuit en boîtier moulé est dans la position ouverte ;
un assemblage de blocage installé dans le tiroir (1) et pouvant être déplacé entre une position bloquée et une position non-bloquée, dans lequel l'assemblage de blocage comprend un châssis de support (9) fixé sur le tiroir (1), et incluant au moins deux ouvertures ; et
un dispositif de verrouillage (4) installé dans le tiroir (1) et incluant un élément d'entraînement (401), un élément élastique (402) et un élément de verrouillage (403), dans lequel l'élément d'entraînement (401) peut être déplacé entre une position verrouillée et une position déverrouillée, et est sollicité vers la position verrouillée par l'élément élastique (402), dans lequel, dans la position verrouillée, l'élément de verrouillage (403) est configuré pour coopérer avec un élément d'appariement prévu dans le caisson de tiroir, verrouillant ainsi le tiroir (1) dans le caisson de tiroir, dans lequel, quand l'élément d'entraînement (401) est entraîné jusqu'à la position déverrouillée en surmontant la force de sollicitation de l'élément élastique (402), l'élément de verrouillage (403) est amené à se désengager de la coopération avec l'élément correspondant, déverrouillant ainsi le tiroir (1),
dans lequel, quand le coupe-circuit (3) en boîtier moulé est fermé, le déplacement de la tige d'entraînement (13) de coupe-circuit en boîtier moulé depuis la position ouverte jusqu'à la position fermée amène l'assemblage de blocage à se déplacer jusqu'à la position bloquée, dans laquelle le déplacement de l'élément d'entraînement (401) depuis la position verrouillée jusqu'à la position déverrouillée est bloqué, de telle sorte que le tiroir (1) ne peut pas être déverrouillé ; quand le coupe-circuit (3) en boîtier moulé est ouvert, le déplacement de la tige d'entraînement (13) de coupe-circuit en boîtier moulé depuis la position fermée jusqu'à la position ouverte amène l'assemblage de blocage à se déplacer vers la position non-bloquée, dans laquelle l'élément d'entraînement (401) peut être entraîné depuis la position verrouillée jusqu'à la position déverrouillée, déverrouillant ainsi le tiroir (1),
**caractérisé en ce que** la tige d'entraînement (13) du coupe-circuit en boîtier moulé peut être mise en rotation autour d'un axe parallèle et espacé par rapport à l'axe longitudinal de celle-ci, et
l'assemblage de blocage comprend :
une tige de poussée (10), incluant une première extrémité articulée avec la tige d'entraînement (13) du coupe-circuit en boîtier moulé et une seconde extrémité ; et
un déflecteur coulissant (7) supporté en passant à travers lesdites au moins deux ouvertures du châssis de support (9), dans lequel la taille desdites au moins deux ouvertures de châssis de support (9) est définie de telle sorte que le déflecteur coulissant (7) peut coulisser uniquement entre une position correspondante et une position non correspondante dans une direction perpendiculaire auxdites au moins deux ouvertures, dans lequel le déflecteur coulissant (7) inclut une encoche (701) sur un côté de celui-ci,
dans lequel le mécanisme d'interverrouillage mécanique comprend en outre une plaque de poussée rotative (6) qui inclut un manchon d'arbre (11) et qui peut être mise en rotation entre une position initiale et une position de rotation autour d'un arbre fixe manchonné dans le manchon d'arbre (11) et fixé dans le tiroir (1), dans lequel la plaque de poussée rotative (6) est sollicitée vers la position initiale par un ressort de rappel (12)de plaque de poussée rotative, et dans la position initiale, une extrémité de la plaque de poussée rotative (6) vient en butée contre l'élément d'entraînement (401) du dispositif de verrouillage, dans lequel la plaque de poussée rotative (6) inclut une langue (601) sur le côté tourné vers le déflecteur coulissant (7), et quand le déflecteur coulissant (7) est à la position correspondante, l'encoche (701) du déflecteur coulissant (7) correspond à la position de la langue (601) de la plaque de poussée rotative (6), et la plaque de poussée rotative (6) peut être mise en rotation jusqu'à la position de rotation via l'entraînement de l'élément d'entraînement (401), et dans la position de rotation, la langue (601) passe à travers l'encoche (701), dans lequel, quand le déflecteur coulissant (7) est dans une position non correspondante, l'encoche (701) du déflecteur coulissant (7) ne correspond pas à la position de la langue (601) de la plaque de poussée rotative (6), et le déflecteur coulissant (7) bloque la rotation de la plaque de poussée rotative (6) depuis la position initiale jusqu'à la position de rotation ,
dans lequel, quand le coupe-circuit en boîtier moulé est fermé, le déplacement de la tige d'entraînement (13) de coupe-circuit en boîtier moulé depuis la position ouverte jusqu'à la position fermée amène la tige de poussée (10) à se déplacer, et la seconde extrémité de la tige de poussée (10) pousse le déflecteur coulissant (7) de telle sorte que le déflecteur coulissant (7) se déplace jusqu'à la position non correspondante, et l'assemblage de blocage se déplace jusqu'à la position bloquée, et le déplacement de l'élément d'entraînement (401) depuis la position verrouillée jusqu'à la position déverrouillée et la rotation de la plaque de poussée rotative (6) depuis la position initiale jusqu'à la position de rotation sont bloqués ;
dans lequel, quand le coupe-circuit en boîtier moulé est ouvert, la tige d'entraînement (13) de coupe-circuit en boîtier moulé se déplace depuis la position fermée jusqu'à la position ouverte, le déflecteur coulissant (7) revient à la position correspondante, l'assemblage de blocage se déplace à la position non bloquée, et l'élément d'entraînement (401) peut être entraîné depuis la position verrouillée jusqu'à la position déverrouillée, et en même temps entraîne la plaque de poussée rotative (6) pour la mettre en rotation depuis la position initiale jusqu'à la position de rotation.

2. Tiroir (1) selon la revendication 1, **caractérisé en ce que** l'assemblage de blocage comprend en outre un ressort de rappel (7) de déflecteur coulissant, qui est un ressort de traction, et dont une extrémité est couplée au déflecteur coulissant (7), et l'autre extrémité est couplée au châssis de support (9), dans lequel, quand la tige d'entraînement (13) de coupe-circuit en boîtier moulé se déplace depuis la position fermée jusqu'à la position ouverte, le déflecteur coulissant (7) revient à la position correspondante sous l'action du ressort de rappel (8) de déflecteur coulissant.

3. Tiroir (1) selon la revendication 1, **caractérisé en ce que** la seconde extrémité de la tige de poussée (10) est articulée avec le déflecteur coulissant, et quand la tige d'entraînement (13) de coupe-circuit en boîtier moulé se déplace depuis la position fermée jusqu'à la position ouverte, le déflecteur coulissant (7) est entraîné par la tige de poussée (10) pour revenir à la position correspondante.

4. Tiroir (1) selon l'une quelconque des revendications 1 à 3, **caractérisé en ce que** le ressort de rappel de la plaque de poussée rotative (6) est un ressort de traction, et une extrémité de celui-ci est connectée à la plaque de poussée rotative (6), et l'autre extrémité est connectée au tiroir (1), dans lequel, quand l'élément d'entraînement se déplace depuis la position déverrouillée jusqu'à la position verrouillée, la plaque de poussée rotative (6) revient à la position initiale sous l'action du ressort de rappel (12) de plaque de poussée rotative.
